Europäisches Patentamt

European Patent Office

Office européen des brevets

(19)

(11) Veröffentlichungsnummer : **0 300 958 B1**

(12) # EUROPÄISCHE PATENTSCHRIFT

(45) Veröffentlichungstag der Patentschrift :
**11.09.91 Patentblatt 91/37**

(51) Int. Cl.$^5$ : **B65G 47/64, B65B 23/12**

(21) Anmeldenummer : **88810380.1**

(22) Anmeldetag : **09.06.88**

(54) **Transporteinrichtung für den Transport aufrechtstehender Produkte, insbesondere von Biscuits.**

(30) Priorität : **23.07.87 CH 2799/87**

(43) Veröffentlichungstag der Anmeldung :
**25.01.89 Patentblatt 89/04**

(45) Bekanntmachung des Hinweises auf die
Patenterteilung :
**11.09.91 Patentblatt 91/37**

(84) Benannte Vertragsstaaten :
**CH DE FR GB IT LI**

(56) Entgegenhaltungen :
**BE-A- 542 708**

(56) Entgegenhaltungen :
**CH-A- 364 454**
**DE-C- 420 554**
**FR-A- 2 377 938**
**US-A- 2 978 120**

(73) Patentinhaber : **SIG Schweizerische**
**Industrie-Gesellschaft**
**CH-8212 Neuhausen am Rheinfall (CH)**

(72) Erfinder : **Rechsteiner, Markus**
**Quellenstrasse 19**
**CH-8200 Schaffhausen (CH)**

(74) Vertreter : **White, William et al**
**Patentanwalts-Bureau Isler AG Postfach 6940**
**CH-8023 Zürich (CH)**

**Beschreibung**

Eine Fördereinrichtung gemäss Oberbegriff des Anspruchs 1 ist aus der US-PS 4553658 bekannt. Diese bekannte Vorrichtung ist allerdings nicht zum Fördern scheibenförmiger Produkte, sondern zum Fördern von Schokoladeriegeln ausgelegt. Sie umfasst in einer oberen Ebene mehrere parallele Förderlinien zur Zufuhr der Produkte zu je einer Verpackungsmaschine. Jede Förderlinie hat eine Bandweiche, mit welcher der Produktstrom bei Ausfall der zugehörigen Verpackungsmaschine auf ein unterhalb der Förderlinie angeordnetes Speicherband umgeleitet werden kann. Ein horizontal schwenkbares Abfuhrförderband wird mit dem betreffenden Speicherband ausgerichtet und fördert die Produkte zu einer Reserveverpackungsmaschine. Diese Fördereinrichtung hat sich bewährt. Allerdings benötigt sie relativ viel Platz.

Der vorliegenden Erfindung liegt die Aufgabe zugrunde, eine Fördereinrichtung gemäss Oberbegriff des Anspruchs 1 derart weiterzubilden, dass sie für den Transport aufrechtstehender, flachseitig aneinanderliegender scheibenförmiger Produkte geeignet ist und wenig Platz beansprucht. Diese Aufgabe wird durch die kennzeichnenden Merkmale des Anspruchs 1 gelöst.

Nachfolgend wird ein Ausführungsbeispiel der Erfindung anhand der Zeichnung erläutert. Darin zeigt :

| Fig. 1 | eine Teilansicht von oben einer Fördereinrichtung, |
| Fig. 2 | und Fig. 3 eine perspektivische Darstellung einer Kreuzung in zwei Betriebsstellungen, |
| Fig. 4 | einen Schnitt durch die Uebergabestelle, und |
| Fig. 5a bis Fig. 5i | schematisch den Umschaltvorgang. |

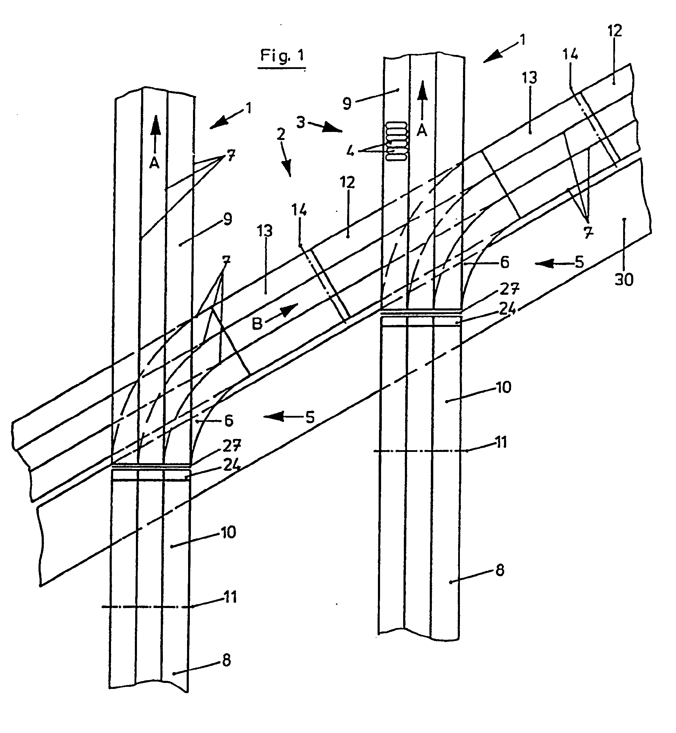

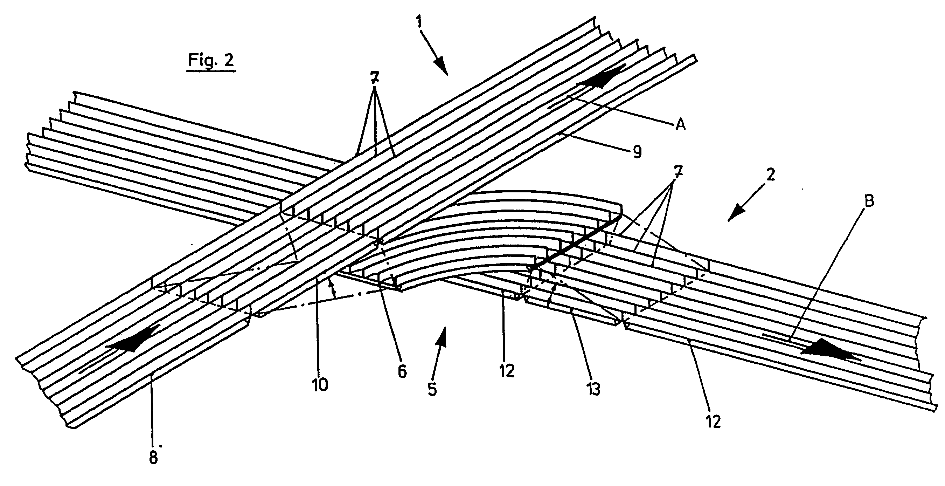

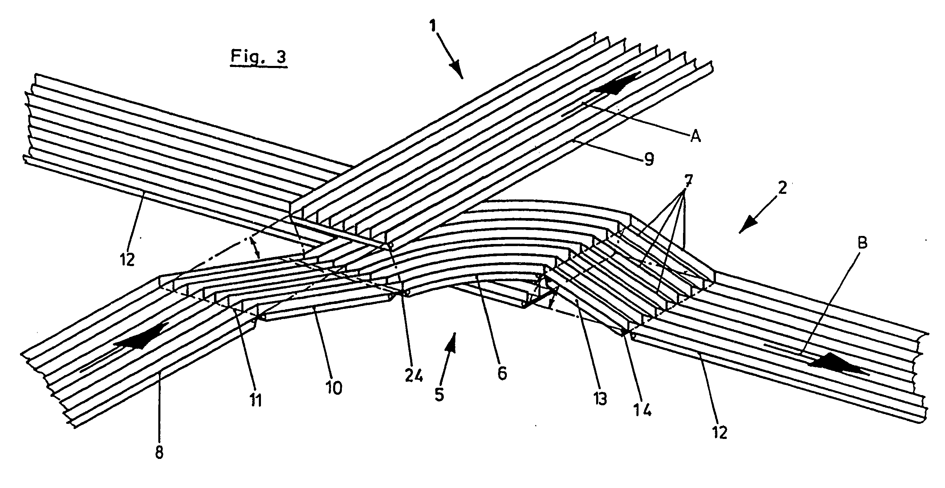

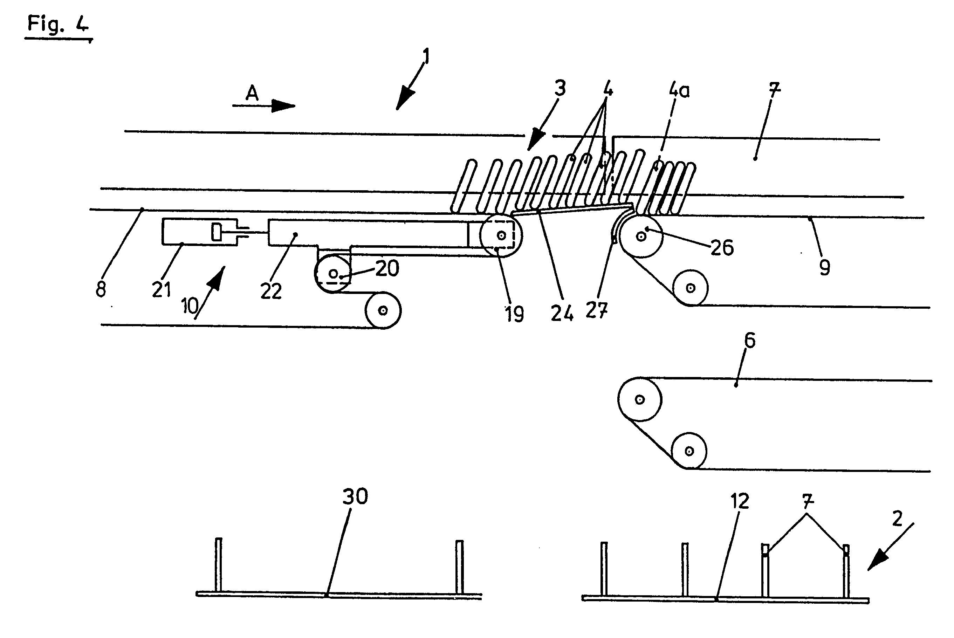

In Fig. 1 ist ein Ausschnitt einer erfindungsgemässen Fördereinrichtung im Grundriss dargestellt. Der besseren Uebersicht wegen sind von mehreren parallel nebeneinander in einer ersten Ebene liegenden Förderlinien 1 nur deren zwei dargestellt. Unterhalb der Förderlinien 1 in einer zweiten Ebene werden die Förderlinien 1 von einer Fördervorrichtung 2 im Winkel zwischen 20° und 90° gekreuzt. Jede Förderlinie 1 transportiert mehrere nebeneinander liegende Kolonnen 3 von flachseitig aneinanderliegenden Biskuits 4 von einer Stapeleinrichtung in Förderrichtung A zu je einer Verpackungsmaschine. Die Fördervorrichtung 2 transportiert die Biskuits 4 einer der Förderlinien 1 in ihrer Förderrichtung B zu einer Reserveverpackungsmaschine, falls die von der betreffenden Förderlinie 1 beschickte Maschine stillsteht. An jeder Kreuzung 5 zwischen Förderlinie 1 und Fördervorrichtung 2 ist in einer zwischen der ersten und zweiten Ebene gelegenen dritten Ebene ein Kurvenförderband 6 angeordnet. Auf den Förderlinien 1, den Kurvenförderbändern 6 und der Fördervorrichtung 2 werden die Kolonnen 3 durch feststehende Leitbleche 7 seitlich geführt. Die Förderlinien 1 bestehen aus zwei annähernd in der Vertikalprojektion über dem stromaufwärtigen Ende des zugehörigen Kurvenförderbandes 6 aneinander anschliessenden Förderbändern 8, 9. Das stromaufwärtige Förderband 8 hat an seinem stromabwärtigen Ende einen Förderbandabschnitt 10, der um eine senkrecht zur Förderrichtung A orientierte horizontale Achse 11 schwenkbar ist. In der in Fig. 2 und 4 dargestellten Grundstellung des Abschnitts 10 fluchtet sein stromabwärtiges Ende mit dem Band 9, in der in Fig. 3 dargestellten ausgerückten Stellung des Abschnitts 10 mit dem stromaufwärtigen Ende des zugehörigen Kurvenförderbandes 6. Die Fördervorrichtung 2 besteht aus mehreren aneinander anschliessenden Förderbandteilstücken 12, 13, von denen jeweils das Teilstück 13 um eine senkrecht zur Förderrichtung B verlaufende Achse 14 an seinem stromabwärtigen Ende schwenkbar ist. Das stromaufwärtige Ende des Teilstücks 13 fluchtet in seiner Grundstellung mit dem vorangehenden Teilstück 12 und in der ausgerückten Stellung mit dem stromabwärtigen Ende des zugehörigen Kurvenförderbandes 6.

In Fig. 4 ist der Uebergang zwischen den Förderbändern 8 und 9 detaillierter dargestellt. Das stromabwärtige Ende des Förderbandes 8 am Förderbandabschnitt 10 ist über eine Umlenkrolle 19 geführt, die zusammen mit einer weiteren Umlenkrolle 20 auf einem in Förderrichtung A mittels eines Pneumatikzylinders 21 hin und her verschiebbaren Schlitten 22 gelagert ist. Anschliessend an die Rolle 19 ist am Abschnitt 10 eine Totplatte 24 befestigt. Zwischen dem freien Ende der Totplatte 24 und einer oberen Umlenkrolle 26 des Förderbandes 9 ist mit einstellbarem Abstand von dieser Rolle 26 ein gebogenes Rückhalteblech 27 angeordnet. Es dient zur Abstützung des hintersten Biskuits 4a der Kolonne 3 auf dem Förderband 9, wenn der Abschnitt 10 abgesenkt wird. In diesem Fall verkeilt sich dieses Biskuit 4a zwischen dem stillstehenden Band 9 und dem Blech 27. Damit kann die auf dem Band 9 stehende Kolonne 3 nicht rückwärts umfallen.

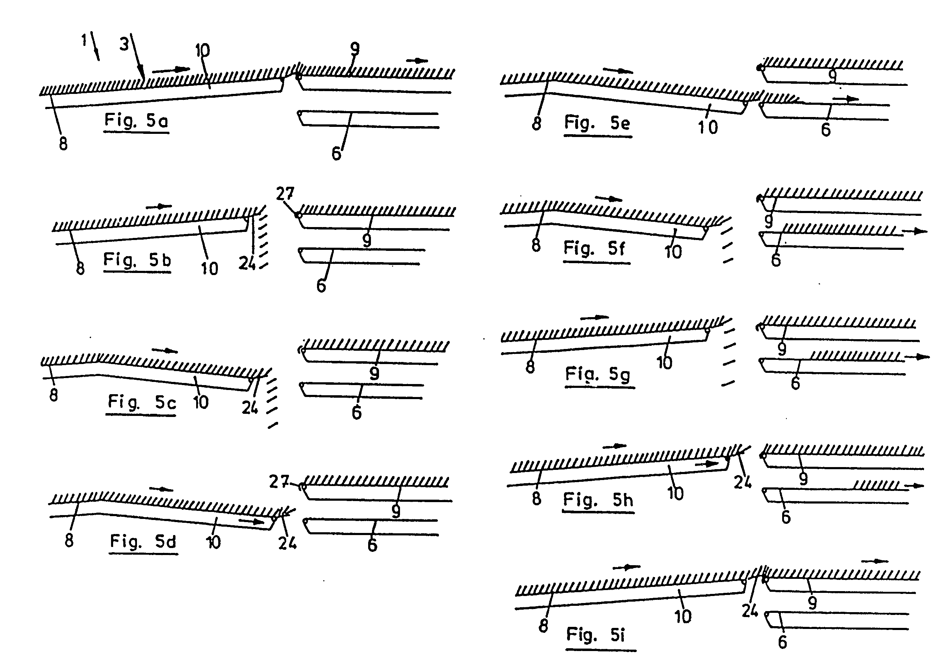

Der Betrieb der beschriebenen Vorrichtung ist in Fig. 5 dargestellt, die den Uebergang vom Abschnitt 10 des Förderbandes 8 zum Förderband 9 bzw. zum Kurvenförderband 6 schematisch in aufeinanderfolgenden Schritten des Schaltvorgangs zeigt. In Fig. 5a ist die Grundstellung gezeigt, in welcher die Förderlinie 1 die Biskuitkolonne 3 der zugehörigen Verpackungsmaschine zuführt. Die Bänder 8 und 9 laufen mit gleicher Geschwindigkeit, der Abschnitt 10 ist in der Grundstellung. Sobald die zugehörige Verpackungsmaschine einen Unterbruch hat, wird das Band 9 stillgelegt und der Schlitten 22 zurückgezogen (Fig. 5b). Die vom Band 8 stetig

2

weiter angelieferten Biskuits 4 fallen über den vorderen Rand der Totplatte 24 nach unten auf ein in Förderrichtung A betrachtet stromaufwärts neben der Fördervorrichtung 2 laufendes Abfallförderband 30. Nun wird der Abschnitt 10 abgesenkt (Fig. 5c) und der Schlitten 22 vorgeschoben. Dabei werden die Biskuits 4 auf der Totplatte 24 zurückgehalten (Fig. 5d). Sobald der Schlitten 22 die vordere Endlage erreicht hat, fluchtet das freie Ende der Totplatte 24 mit dem stromaufwärtigen Ende des Kurvenförderbandes 6 (Fig. 5e) und die Biskuitkolonne 3 wird über das Kurvenförderband 6 und das inzwischen hochgeschwenkte zugehörige Förderbandteilstück 13 der Fördervorrichtung 2 und damit der Reserveverpackungsmaschine zugeführt. Sobald die stillstehende Verpackungsmaschine wieder betriebsbereit ist, wird der Schlitten 22 wieder zurückgezogen (Fig. 5f) und der Abschnitt 10 hochgeschwenkt (Fig. 5g). Anschliessend wird der Schlitten 22 vorgeschoben (Fig. 5h), bis er wieder die Grundstellung erreicht hat (Fig. 5i). Nun wird das Band 9 eingeschaltet, womit wieder die Ausgangsstellung erreicht ist.

Die beschriebene Vorrichtung ist einfach und übersichtlich aufgebaut, benötigt wenig Raum und kann leicht durch Modulbauweise ergänzt oder andern Betriebsbedingungen angepasst werden. Sie ermöglicht eine schonende Behandlung der Biskuits, deren Orientierung während des Transportes erhalten bleibt.

Abweichend vom dargestellten Ausführungsbeispiel können die nicht schwenkbaren Abschnitte und Teilstücke der Förderlinien 1 und der Fördervorrichtung 2 auch als Schwingförderer ausgebildet werden.

**Patentansprüche**

1. Transporteinrichtung mit mehreren in einer ersten Ebene nebeneinander angeordneten Förderlinien (1) für den Transport aufrecht stehender, flachseitig aneinander liegender Produkte (4), insbesondere Biskuits, zu je einer Verpackungsmaschine, mit einer zusätzlichen Fördervorrichtung (2) zur wahlweisen Zuführung der Produkte (4) einer der Förderlinien (1) zu einer Reserveverpackungsmaschine, wobei jede Förderlinie (1) einen um eine senkrecht zu ihrer Förderrichtung (A) stehende Achse (11) schwenkbaren Förderbandabschnitt (10) hat, der in der Grundstellung die Produkte (4) einem weiteren Abschnitt (9) dieser Förderlinie (1) und in der ausgeschwenkten Stellung der Fördervorrichtung (2) zuführt, und die Fördervorrichtung (2) in einer von der ersten Ebene beabstandeten zweiten Ebene angeordnet ist, dadurch gekennzeichnet, dass die Fördervorrichtung (2) die Förderlinien (1) kreuzt, dass der Förderbandabschnitt (10) in jeder Förderlinie (1) stromaufwärts ihrer Kreuzung (5) mit der Fördervorrichtung (2) angeordnet ist, dass an jeder Kreuzung (5) in einer zwischen der ersten und zweiten Ebene gelegenen dritten Ebene ein Kurvenförderband (6) angeordnet ist, mit dessen stromaufwärtigem Ende das stromabwärtige Ende des Förderbandabschnittes (10) der zugehörigen Förderlinie (1) in der ausgeschwenkten Stellung fluchtet, und dass in der Fördervorrichtung (2) stromabwärts jeder Kreuzung (5) ein um eine senkrecht zur Förderrichtung (B) der Fördervorrichtung (2) stehende Achse (14) schwenkbares Förderbandteilstück (13) angeordnet ist, dessen stromaufwärtiges Ende in der Grundstellung mit einem vorgeschalteten Teilstück (12) der Fördervorrichtung (2) und in der ausgerückten Stellung mit dem stromabwärtigen Ende des zugehörigen Kurvenförderbandes (6) fluchtet.

2. Transporteinrichtung nach Anspruch 1, dadurch gekennzeichnet, dass die stromabwärtigen Enden der Förderbandabschnitte (10) in der Vertikalprojektion gesehen neben der Fördervorrichtung (2) liegen.

3. Transporteinrichtung nach Anspruch 1 oder 2, dadurch gekennzeichnet, dass das stromabwärtige Ende der Förderbandabschnitte (10) in Förderrichtung (A) der Förderlinien (1) verschiebbar ist.

4. Transporteinrichtung nach einem der Ansprüche 1 bis 3, dadurch gekennzeichnet, dass am stromabwärtigen Ende jedes Förderbandabschnittes (10) eine Totplatte (24) befestigt ist.

5. Transporteinrichtung nach einem der Ansprüche 1 bis 4, dadurch gekennzeichnet, dass stromaufwärts jedes der weiteren Abschnitte (9) der Förderlinien (1) ein Rückhalteelement (27) zum Stützen des hintersten Produktes (4) auf dem weiteren Abschnitt (9) angeordnet ist.

6. Transporteinrichtung nach einem der Ansprüche 1 bis 5, dadurch gekennzeichnet, dass in Förderrichtung (A) der Förderlinien (1) gesehen stromaufwärts neben der Fördervorrichtung (2) ein Abfallförderer (30) angeordnet ist.

7. Transporteinrichtung nach einem der Ansprüche 1 bis 6, dadurch gekennzeichnet, dass jede Förderlinie (1) jedes Kurvenförderbandes (6) sowie die Fördervorrichtung (2) mehrere seitliche Führungen (7) für mehrere nebeneinander liegende Kolonnen (3) von Produkten (4) aufweisen.

8. Transporteinrichtung nach einem der Ansprüche 1 bis 7, dadurch gekennzeichnet, dass die Fördervorrichtung (2) die Förderlinien (1) unter einem Winkel zwischen 20° und 90° kreuzt.

## Claims

1. Conveying device having a plurality of conveyor lines (1), which are disposed adjacent to one another in a first plane, for conveying upright products (4), in particular biscuits, which abut against one another on their flat sides, to a packaging machine, having an additional conveyor device (2) for selectively delivering the products (4) of one of the conveyor lines (1) to a reserve packaging machine, wherein each conveyor line (1) has a conveyor belt portion (10), which is pivotable about an axis (11) which is perpendicular to its direction of transport (A), and which, in the basic position, delivers the products (4) to a further portion (9) of this conveyor line (1) and, in the swivelled-out position, to the conveyor device (2), and the conveyor device (2) is disposed in a second plane which is spaced from the first plane, characterised in that the conveyor device (2) intersects the conveyor lines (1), the conveyor belt portion (10) in each conveyor line (1) is disposed upstream of its intersection (5) with the conveyor device (2), a curved conveyor belt (6) is disposed at each intersection (5) in a third plane, which lies between the first and second planes, the upstream end of which belt is in alignment with the downstream end of the conveyor belt portion (10) of the associated conveyor line (1) in the swivelled-out position, and a conveyor belt part (13) is disposed in the conveyor device (2) downstream of each intersection (5) and is pivotable about an axis (14), which is perpendicular to the direction of transport (B), the upstream end of which part aligns in the basic position with a part (12) of the conveyor device (2) which is connected upstream, and, in the disengaged position, with the downstream end of the associated curved conveyor belt (6).

2. Conveying device as in claim 1, characterised in that the downstream ends of the conveyor belt portions (10) lie adjacent to the conveyor device (2) as seen in the vertical projection.

3. Conveying device as in claim 1 or 2, characterised in that the downstream end of the conveyor belt portions (10) is displaceable in the direction of transport (A) of the conveyor lines (1).

4. Conveying device as in any of claims 1 to 3, characterised in that a dead plate (24) is secured on the downstream end of each conveyor belt portion (10).

5. Conveying device as in any of claims 1 to 4, characterised in that a retaining element (27) is disposed upstream of each of the further portions (9) of the conveyor lines (1) for supporting the rearmost product (4) on the further portion (9).

6. Conveying device as in any of claims 1 to 5, characterised in that a waste conveyor (30) is disposed upstream adjacent to the conveyor device (2) as seen in the direction of transport (A) of the conveyor lines (1).

7. Conveying device as in any of claims 1 to 6, characterised in that each conveyor line (1) of each curved conveyor belt (6) and the conveyor device (2) have a plurality of lateral guides (7) for a plurality of columns (3) of products (4) lying adjacent to one another.

8. Conveying device as in any of claims 1 to 7, characterised in that the conveyor device (2) crosses the conveyor lines (1) at an angle of between 20° and 90°.

## Revendications

1. Installation de transport, comprenant plusieurs lignes de transport (1) disposées côte à côte dans un premier plan pour le transport, vers des machines d'emballage respectives, de produits (4), en particulier de biscuits, placés verticalement les uns contre les autres face contre face, avec un dispositif transporteur supplémentaire (2) pour diriger selon les nécessités les produits (4) de l'une des lignes de transport (1) vers une machine d'emballage de réserve, chaque ligne de transport (1) comportant un segment de bande transporteuse (10) qui peut pivoter autour d'un axe (11) perpendiculaire à sa direction de transport (A) et qui, dans sa position de base, entraîne les produits (4) vers un segment ultérieur (9) de cette ligne de transport (1) et, dans sa position basculée, les entraîne vers le dispositif transporteur (2), et le dispositif transporteur (2) étant situé dans un deuxième plan distant du premier plan, caractérisée en ce que le dispositif transporteur (2) croise les lignes de transport (1), en ce que le segment de bande transporteuse (10) est situé, dans chaque ligne de transport (1), en amont du croisement (5) de celle-ci avec le dispositif transporteur (2), en ce qu'il est disposé à chaque croisement (5), dans un troisième plan situé entre les premier et deuxième plans, une bande transporteuse incurvée (6) avec l'extrémité amont de laquelle l'extrémité aval du segment de bande transporteuse (10) de la ligne de transport (1) correspondante est alignée dans sa position basculée, et en ce qu'il est disposé dans le dispositif transporteur (2), en aval de chaque croisement (5), un tronçon de bande transporteuse (13) qui peut pivoter autour d'un axe (14) perpendiculaire à la direction de transport (B) du dispositif transporteur (2) et dont l'extrémité amont est alignée, dans la position de base, avec un tronçon précédent (12) du dispositif transporteur (2), tandis qu'en position basculée, elle est alignée avec l'extrémité aval de la bande transporteuse incurvée (6) correspondante.

2. Installation de transport selon la revendication 1, caractérisée en ce qu'en projection verticale, les extrémités aval des segments de bande transporteuse (10) sont situées à côté du dispositif transporteur (2).

3. Installation de transport selon la revendication 1 ou 2, caractérisée en ce que l'extrémité aval des segments de bande transporteuse (10) est déplaçable dans la direction de transport (A) des lignes de transport (1).

4. Installation de transport selon l'une quelconque des revendications 1 à 3, caractérisée en ce qu'une plaque morte (24) est fixée à l'extrémité aval de chaque segment de bande transporteuse (10).

5. Installation de transport selon l'une quelconque des revendications 1 à 4, caractérisée en ce qu'il est disposé, en amont de chacun des segments ultérieurs (9) des lignes de transport (1), un élément de retenue (27) pour le soutien du produit (4) le plus postérieur sur le segment ultérieur (9).

6. Installation de transport selon l'une quelconque des revendications 1 à 5, caractérisée en ce qu'un transporteur de rebuts (30) est disposé à côté du dispositif transporteur (2), en amont de celui-ci en considérant la direction de transport (A) des lignes de transport (1).

7. Installation de transport selon l'une quelconque des revendications 1 à 6, caractérisée en ce que chaque ligne de transport (1), chaque bande transporteuse incurvée (6) et le dispositif transporteur (2) présentent plusieurs guides latéraux (7) pour plusieurs colonnes (3) de produits (4) disposées côte à côte.

8. Installation de transport selon l'une quelconque des revendications 1 à 7, caractérisée en ce que le dispositif transporteur (2) croise les lignes de transport (1) sous un angle compris entre 20° et 90°.

Fig. 1

Fig. 2

Fig. 3

EP 0 300 958 B1

Fig. 4

EP 0 300 958 B1

Fig. 5a

Fig. 5b

Fig. 5c

Fig. 5d

Fig. 5e

Fig. 5f

Fig. 5g

Fig. 5h

Fig. 5i